(19) Europäisches Patentamt / European Patent Office / Office européen des brevets

(11) **EP 4 380 818 B1**

(12) **EUROPÄISCHE PATENTSCHRIFT**

(45) Veröffentlichungstag und Bekanntmachung des Hinweises auf die Patenterteilung:
**03.09.2025 Patentblatt 2025/36**

(21) Anmeldenummer: **22757555.2**

(22) Anmeldetag: **26.07.2022**

(51) Internationale Patentklassifikation (IPC):
**B60L 53/63** *(2019.01)* **B60L 53/66** *(2019.01)*
**B60L 53/67** *(2019.01)*

(52) Gemeinsame Patentklassifikation (CPC):
**B60L 53/67; B60L 53/63; B60L 53/66;**
B60L 2240/62; Y02T 10/70; Y02T 10/7072;
Y02T 90/12

(86) Internationale Anmeldenummer:
**PCT/EP2022/070918**

(87) Internationale Veröffentlichungsnummer:
**WO 2023/011982 (09.02.2023 Gazette 2023/06)**

(54) **ANPASSEN VON LADEVORGÄNGEN VON ELEKTROFAHRZEUGEN**

ADAPTING CHARGING OPERATIONS OF ELECTRIC VEHICLES

ADAPTATION DE PROCESSUS DE CHARGE DE VÉHICULES ÉLECTRIQUES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **02.08.2021 DE 102021119966**

(43) Veröffentlichungstag der Anmeldung:
**12.06.2024 Patentblatt 2024/24**

(73) Patentinhaber: **Bayerische Motoren Werke Aktiengesellschaft
80809 München (DE)**

(72) Erfinder: **MARCIAL-SIMON, Enrique
97209 Veitshöchheim (DE)**

(56) Entgegenhaltungen:
EP-A2- 3 726 455     EP-B1- 2 760 696
US-A1- 2017 036 560     US-A1- 2017 043 671

**Beschreibung**

Die Erfindung betrifft ein Verfahren zum Anpassen von Ladevorgängen von Elektrofahrzeugen, bei dem ein Flottenbetreiber einer Flotte von Elektrofahrzeugen eine Energieanforderungsinformation von einem Betreiber eines ersten Energieversorgungsnetzes empfängt. Die Erfindung betrifft auch ein Ladesteuerungssystem, das dazu eingerichtet ist, das Verfahren durchzuführen. Die Erfindung betrifft ferner ein Computerprogrammprodukt, aufweisend Code, der, wenn er auf einer Datenverarbeitungseinrichtung des Ladesteuerungssystems durchgeführt wird, das Verfahren ablaufen lässt.

Energiespeicher, insbesondere Batterien, von Elektrofahrzeugen (z.B. Plug-In-Hybridfahrzeuge oder vollelektrisch betriebene Fahrzeuge) werden an Ladestationen aufgeladen, die jeweils einem Energieversorgungsnetz eines bestimmten Betreibers bzw. Energieversorgers zugeordnet sind. Dabei können die Ladevorgänge von einer Vielzahl von Einflussgrößen beeinflusst werden, z.B. von einer von dem Energieversorger bereitgestellten Energiemenge, einer Auslastung des Energieversorgungsnetzes, vereinbarten Ladekonditionen zwischen dem Nutzer des Elektrofahrzeugs und dem Hersteller des Elektrofahrzeugs, usw. Wenn bekannt ist, welche Elektrofahrzeuge mit welchen Ladeeigenschaften an welchen Ladestationen angeschlossen sind, kann deren Ladeverhalten an die aktuellen Anforderungen des Energieversorgungsnetz angepasst werden und das Energieversorgungsnetz dadurch besser ausbalanciert werden kann. Ein solches Energieversorgungsmanagement ist grundsätzlich bekannt.

Ist beispielsweise die in einem bestimmten Energieversorgungsnetz verfügbare Energiemenge aktuell begrenzt, kann der Betreiber des Energieversorgungsnetzes eine Energieanforderungsinformation an mit ihm zusammenarbeitende Flottenbetreiber von Flotten von Elektrofahrzeugen ausgeben, dass der Stromverbrauch von aktuell an diesem Energieversorgungsnetz ladenden Elektrofahrzeugen gesenkt werden soll. Die Flottenbetreiber können dann die Ladevorgänge dieser ladenden Elektrofahrzeuge ferngesteuert (z.B. durch Ausgabe entsprechender SMS-Nachrichten) an die Energieanforderungsinformation anpassen, z.B. die Ladeleistung reduzieren, Ladevorgänge frühzeitig abbrechen usw.

Die Kenntnis, welches Elektrofahrzeug an einer Ladestation des betrachteten Energieversorgungsnetzes angeschlossen ist, kann sich durch Datenaustausch zwischen den Ladepartnern, d.h., der Ladestation und dem Elektrofahrzeug, ergeben, beispielsweise durch eine Übertragung von das Elektrofahrzeug eindeutig identifizierbaren Daten wie dessen VIN, z.B. nach ISO 15118, oder einen "Fingerabdruck" von Lademerkmalen des Elektrofahrzeugs. Diese Daten als auch die Tatsache, dass ein bestimmtes Elektrofahrzeug aktuell lädt, können von dem Elektrofahrzeug an einen zugehörigen Flottenbetreiber übertragen werden, z.B. über Funk. Der Flottenbetreiber weiß dann also eindeutig, ob dieses Elektrofahrzeug seinen Ladestrom aus dem Energieversorgungsnetz, von dem er eine Energieanforderungsinformation erhalten hat, bezieht.

DE 10 2015 210 726 A1 offenbart ein Verfahren zur Ermittlung eines Ladepaars mit jeweils einem Ladepartner aus zwei unterschiedlichen Mengen von möglichen Ladepartnern beschrieben. Die zwei unterschiedlichen Mengen umfassen eine Menge von möglichen Ladestationen und eine Menge von möglichen Fahrzeugen. Das Ladepaar umfasst eine Ladestation und ein Fahrzeug, das an der Ladestation einen Ladevorgang durchführt. Das Verfahren umfasst das Veranlassen eines Stimulus in Bezug auf den Ladevorgang durch einen stimulierenden Ladepartner aus einer ersten Menge der zwei Mengen von möglichen Ladepartnern. Außerdem umfasst das Verfahren das Detektieren einer Reaktion auf den Stimulus durch einen reagierenden Ladepartner aus einer zweiten Menge der zwei Mengen von möglichen Ladepartnern. Des Weiteren umfasst das Verfahren das Bilden eines Ladepaars, welches den stimulierenden Ladepartner und den reagierenden Ladepartner umfasst.

DE 10 2016 212 245 A1 ist gerichtet auf ein Verfahren zum Betreiben einer Ladestation, welches es ermöglicht, ein elektrisch betriebenes Fahrzeug erst nach einer positiven Identifizierung mit der maximalen Ladeleistung zu versorgen. ist gerichtet auf ein Verfahren zum Planen eines elektrischen Ladevorgangs eines Fahrzeugs, welches mittels eines Ladekabels elektrisch mit einer Ladestation gekoppelt wird.

DE 10 2016 212 244 A1 ist gerichtet auf ein Verfahren zum Planen eines elektrischen Ladevorgangs eines Fahrzeugs, welches mittels eines Ladekabels elektrisch mit einer Ladestation gekoppelt wird.

DE 10 2018 212 283 A1 offenbart ein Verfahren zur Ermittlung eines Ladepaars mit jeweils einem Ladepartner aus zwei unterschiedlichen Mengen von möglichen Ladepartnern, wobei die zwei unterschiedlichen Mengen eine Menge von möglichen Ladestationen und eine Menge von möglichen Hybrid- oder Elektrofahrzeugen umfassen, wobei das Ladepaar eine Ladestation und ein Hybrid- oder Elektrofahrzeug umfasst, das an der Ladestation einen Ladevorgang durchführt. Das Verfahren umfasst ein Bestimmen wenigstens einer zeitlichen Reaktionseigenschaft wenigstens eines möglichen Ladepartners aus den möglichen Ladepartnern; ein Veranlassen eines Stimulus in Bezug auf den Ladevorgang durch einen stimulierenden Ladepartner aus einer ersten Menge der zwei Mengen von möglichen Ladepartnern, wobei der Stimulus basierend auf der wenigstens einen zeitlichen Reaktionseigenschaft veranlasst wird; ein Detektieren einer Reaktion auf den Stimulus durch einen reagierenden Ladepartner aus einer zweiten Menge der zwei Mengen von möglichen Ladepartnern; und ein Bilden eines Ladepaars, das den stimulierenden Ladepartner und den reagierenden Ladepartner umfasst, basierend auf der detektierten Reaktion.

US 2017/043671 A1 offenbart ein Steuersystem zur Überwachung eines Servicenetzwerks für Elektrofahrzeuge, das eine Vielzahl von Servicestationen umfasst, die eine Flotte von Elektrofahrzeugen mit elektrischer Energie aufladen. Das Steuersystem ist für die Kommunikation mit den Elektrofahrzeugen über ein Kommunikationsnetzwerk konfiguriert und betriebsfähig und umfasst: eine Verarbeitungseinheit, die für die Aggregation von mit mindestens einigen der Elektrofahrzeuge verbundenen Fahrzeugroutenplanungsinformationen konfiguriert ist, um Prognosedaten des Flusses von Elektrofahrzeugen zu den Servicestationen im Zeitverlauf zu erstellen; und eine Servicezeitschätzungseinheit, die für die Nutzung der Prognosedaten und die Bewertung der Servicedauer für die Wartung eines bestimmten Elektrofahrzeugs an einer bestimmten Servicestation und zu einer bestimmten Servicezeit basierend auf der Prognose konfiguriert und betriebsfähig ist.

EP 2 760 696 B1 offenbart ein Verfahren zum Laden von Elektrofahrzeugen durch Ladestationen, umfassend die Schritte a) Zuordnen von Elektrofahrzeugen zu verschiedenen Elektrofahrzeug-Versorgungseinrichtungen der Ladestationen und b) Laden der Elektrofahrzeuge gemäß Elektrofahrzeug-Ladeinformationen und bereitgestellter Ladeleistung durch die Elektrofahrzeug-Versorgungseinrichtungen der Ladestationen, wobei eine Übereinstimmung von Elektrofahrzeug-Ladeinformationen, vorzugsweise Lastprofilen, von Elektrofahrzeugen und Ladeleistungsinformationen, vorzugsweise bereitgestellter Ladeleistung, verschiedener Ladestationen basierend auf Elektrofahrzeuginformationen und einem Ladestationsparameter vorhergesagt wird und wobei basierend auf der vorhergesagten Übereinstimmung die Schritte a) und b) ausgeführt werden. Die vorliegende Erfindung betrifft.

US 2017/036560 A1 offenbart ein Verfahren zum Lastausgleich von Ladestationen für mobile Lasten innerhalb eines Ladestationsnetzwerks, umfassend das Durchführen einer Verteilung einer Energie-Leistungs-Reichweitenbegrenzung für jede der Ladestationen p unter Berücksichtigung eines definierbaren Optimierungsparameters basierend auf einer Vorhersage eines Ladebedarfs der mobilen Lasten, wobei p = 1, ... , n und n und p ganze Zahlen sind. Unter Berücksichtigung der Verteilung wird eine Anpassung und/oder Auswahl mindestens eines Transportparameters einer mobilen Last durchgeführt, um die Energie-Leistungs-Reichweitenbegrenzung für jede oder für eine definierbare Anzahl der Ladestationen p zumindest teilweise zu erfüllen.

EP 3 726 455 A2 offenbart ein Verfahren zur Prognose einer Verfügbarkeit wenigstens einer Ladestation für ein Elektrofahrzeug, wobei für eine Mehrzahl an Elektrofahrzeugen jeweils ein konkreter Ladebedarf ermittelt wird, wobei jedes der Elektrofahrzeuge in Abhängigkeit des konkreten Ladebedarfs eine Anfrage hinsichtlich einer Verfügbarkeit wenigstens einer Ladestation ausgibt, und wobei für die wenigstens eine Ladestation anhand der Anfragen der Elektrofahrzeuge eine reale Nachfrage nach einem Ladevorgang abgeschätzt wird, und hieraus eine erste Wahrscheinlichkeit für eine Verfügbarkeit der wenigstens einen Ladestation zu einem zukünftigen Zeitpunkt ermittelt wird.

Ein Elektrofahrzeug kann auch durch eine eindeutige örtliche Korrelation ("1-zu-1-Zuodnung") seiner Fahrzeugposition zu der Position einer Ladestation eindeutig identifizierbar sein. Dies ist beispielsweise der Fall, wenn die Position des Elektrofahrzeugs bei hoher Genauigkeit der Positionsbestimmungseinrichtung (z.B. von $\pm$ 1 m) mit der ebenfalls mit hoher Genauigkeit bekannten Position der Ladestation übereinstimmt, ggf. unter der weiteren Kenntnis, dass sich kein weiteres Elektrofahrzeug in der Nähe der Ladestation befindet.

Jedoch tritt dann ein Problem auf, wenn dem Flottenbetreiber zwar bekannt ist, dass ein Elektrofahrzeug seiner Flotte an einer Ladestation in der Nähe des betrachteten Energieversorgungsnetzes lädt, sich die Ladestation aber nicht eindeutig identifizieren lässt. Dieser Fall kann beispielsweise vorliegen, wenn die Ladepartner keine sie eindeutig identifizierenden Daten austauschen und die Position des Elektrofahrzeugs nur ungenau bekannt ist (z.B. innerhalb eines Radius von 10 m, beispielsweise aufgrund einer ungenauen verwendeten Ortungstechnologie oder durch ein Vorhandensein von Gebäuden, Bergen usw.) und/oder Ladestationen, insbesondere auch unterschiedlicher Energieversorger, nahe beieinander liegen und/oder deren Position nicht genau bekannt ist.

Es ist die **Aufgabe** der vorliegenden Erfindung, die Nachteile des Standes der Technik zumindest teilweise zu überwinden und insbesondere eine verbesserte Möglichkeit für einen Flottenbetreiber bereitzustellen, auf Anforderung eines Betreibers eines Energieversorgungsnetzes hin Ladevorgänge von an Ladestationen dieses Energieversorgungsnetzes ladenden Elektrofahrzeugen auf die Anforderung hin anzupassen.

Diese Aufgabe wird gemäß den Merkmalen der unabhängigen Ansprüche gelöst. Bevorzugte Ausführungsformen sind insbesondere den abhängigen Ansprüchen entnehmbar.

Die Aufgabe wird gelöst durch ein Verfahren zum Anpassen von Ladevorgängen von Elektrofahrzeugen, bei dem ein Flottenbetreiber einer Flotte von Elektrofahrzeugen

- eine Energieanforderungsinformation von einem Betreiber eines Energieversorgungsnetzes (im Folgenden ohne Beschränkung der Allgemeinheit als "erstes" Energieversorgungsnetz bezeichnet) empfängt;
- aktuell ladenden Elektrofahrzeugen der Flotte, die sich in der Nähe des ersten Energieversorgungsnetzes bzw. mindestens einer Ladestation davon befinden und nicht eindeutig einer Ladestation zugeordnet bzw. zuordenbar sind, eine Wahrscheinlichkeit zuordnet, dass sie aktuell aus dem ersten Energieversorgungsnetz laden bzw. an mindestens eine Ladestation davon angeschlossen sind,
- beruhend auf diesen Wahrscheinlichkeiten die Elektrofahrzeuge als aus dem ersten Energieversorgungsnetzes ladend oder nicht aus dem ersten Energieversorgungsnetzes ladend einstuft und

- die Ladevorgänge der als aus dem ersten Energieversorgungsnetzes ladend bzw. an das erste Energieversorgungsnetzes angeschlossen eingestuften Elektrofahrzeuge beruhend auf der empfangenen Energieanforderungsinformation anpasst.

Dadurch wird der Vorteil erreicht, dass auch dann, wenn keine eindeutige 1-zu-1-Zuordnung zwischen einem ladenden Elektrofahrzeug und einer Ladestation des ersten Energieversorgungsnetzes herstellbar ist, der Flottenbetreiber dieses Elektrofahrzeug dennoch in seine Ladestrategie für das erste Energieversorgungsnetz einbeziehen kann. Dies wiederum verbessert die Ausbalancierung des ersten Energieversorgungsnetzes.

Dabei wird vorausgesetzt, dass sich die in der Nähe des ersten Energieversorgungsnetzes befindliche Elektrofahrzeuge individuell fernidentifizieren lassen, z.B. durch Funkübermittlung bzw. Funkabfrage ihrer VIN. Ist ein Elektrofahrzeug individuell identifizierbar, sind typischerweise auch seine Ladeeigenschaften bekannt, beispielsweise fahrzeuginhärente Lademerkmale wie eine Kapazität des Energiespeichers, eine Ladegeschwindigkeit, ein Alter des Energiespeichers, usw. und ggf. auch vertraglich ausgehandelte Ladekonditionen wie das Recht auf eine volle oder nur teilweise Aufladung. Außerdem sind von dem fernidentifizierbaren Elektrofahrzeug seine Geoposition und sein Ladestatus (z.B. ladend / nicht ladend) an den Flottenbetreiber übertragbar. Diese Fahrzeuginformationen können von dem Elektrofahrzeug selbsttätig an den Flottenbetreiber übermittelt werden ("push"), z.B. in regelmäßigen Zeitabständen oder eventgesteuert, z.B. mit Beginn eines Ladevorgangs. Die Fahrzeuginformationen können alternativ oder zusätzlich von dem Flottenbetreiber fernabgefragt werden ("pull").

Das Elektrofahrzeug kann z.B. ein Pkw, Lkw, Bus, Motorrad usw. sein.

Der Flottenbetreiber kann ein Hersteller von Elektrofahrzeugen sein oder kann Elektrofahrzeuge unterschiedlicher Hersteller betreiben. Der Flottenbetreiber kann insbesondere ein Ladesteuerungssystem unterhalten, um das Verfahren durchzuführen. Das Ladesteuerungssystem ist insbesondere dazu eingerichtet, die Ladevorgänge beruhend auf einer Ladestrategie anzupassen, die auf einem Energieversorgungsmanagement beruht.

Eine Energieanforderungsinformation kann einen aktuellen oder prognostizierten Status des ersten Energieversorgungsnetzes umfassen, der Ladevorgänge von Elektrofahrzeugenbeeinflussen könnte, z.B. eine zur Verfügung stehende elektrische Energiemenge oder Leistung oder Änderungen davon. Beispielsweise kann es durch einen Ausfall von Energieerzeugungseinheiten (Kraftwerken, Solaranlagen, usw.), den Ausfall von Stromtrassen, einem gestiegenen Energieverbrauch anderer Verbraucher des Energieversorgungsnetzes, usw. auch kurzfristig zu einer Reduzierung der im ersten Energieversorgungsnetz zur Verfügung stehenden Energiemenge kommen. Die Energieanforderungsinformation kann dann z.B. eine Aufforderung umfassen, die genutzte Ladeleistung von ladenden Elektrofahrzeugen kurzfristig zu reduzieren. Der Flottenbetreiber wird dann durch ferngesteuertes Anpassen der Ladevorgänge von aktuell ladenden Elektrofahrzeugen versuchen, diesem Wunsch nachzukommen, und zwar so, dass die Nutzer der ladenden Elektrofahrzeuge davon möglichst wenig beeinträchtigt werden.

Insbesondere folgende aktuell ladende Elektrofahrzeuge können durch den Flottenbetreiber eindeutig dem ersten Energieversorgungsnetz zugeordnet werden:

- alle Elektrofahrzeuge, die in einer 1-zu-1-Beziehung zu einer Ladestation des ersten Energieversorgungsnetzes stehen;
- alle Elektrofahrzeuge, die sich eindeutig innerhalb der geographischen Ausdehnung bzw. Fläche des ersten Energieversorgungsnetzes befinden, auch wenn sie keine 1-zu-1-Beziehung zu einer Ladestation aufgebaut haben.

Unter einem Elektrofahrzeug "in der Nähe" des ersten Energieversorgungsnetzes kann andererseits ein Elektrofahrzeug verstanden werden, das aus Sicht des Flottenbetreibers unter Berücksichtigung der Positionsungenauigkeiten des Elektrofahrzeugs und/oder der Ladestation an das erste Energieversorgungsnetz oder an ein benachbartes ("zweites") Energieversorgungsnetz angeschlossen sein könnte. Dass ein aktuell ladendendes Elektrofahrzeug nicht eindeutig einer Ladestation zuordenbar ist, umfasst insbesondere, dass dem Flottenbetreiber zwar bekannt ist, dass das Elektrofahrzeug lädt, aber nicht eindeutig bestimmen kann, ob es aus einer Ladestation des ersten Energieversorgungsnetzes oder aus einer Ladestation des benachbarten zweiten Energieversorgungsnetzes lädt.

Der Betreiber des ersten Energieversorgungsnetzes und der Betreiber des zweiten Energieversorgungsnetzes können unterschiedliche Betreiber oder der gleiche Betreiber sein. Insbesondere wenn der Betreiber gleich ist, können das erste Energieversorgungsnetz und das zweite Energieversorgungsnetz Sub- bzw. Teilnetze eines übergeordneten Energieversorgungsnetzes sein.

Unsicherheiten bezüglich der Position des Elektrofahrzeugs und/oder einer Ladestation können beispielsweise durch einen oder mehrere der folgenden Gründe bedingt sein:

- die Positionsbestimmungseinrichtung bzw. verwendete Ortungstechnologie der Elektrofahrzeuge gibt nur vergleichsweise ungenaue Positionen aus;

- die Positionsbestimmung unterliegt geografisch bedingten Unsicherheiten, z.B. durch hohen Gebäude in einem Straßenzug, Berge usw.;
- die Position der Ladestation ist nicht genau erfasst worden. So ist beispielsweise das Szenario denkbar, dass bestimmte Gebäude eines Straßenzugs mit Ladestationen ausgerüstet sind (z.B. mit entsprechenden Schuko-Steckern), aber dem Energieversorger die Position der Schuko-Stecker an den Gebäuden nicht bekannt ist oder noch nicht einmal bekannt ist, an welchen Gebäuden des Straßenzugs sich eine Ladestation befindet. Erschwerend kann hinzukommen, dass eine Seite des Straßenzugs aus dem ersten Energieversorgungsnetz (oder "Grid") versorgt wird, während die andere Seite aus einem zweiten Energieversorgungsnetz versorgt wird.

Die Ladestationen können dedizierte Ladestationen sein. Die Ladestationen können auch Schuko-Stecker oder andere Hausanschlussstecker sein, z.B. Wallboxen. Ein Energieversorgungsnetz kann in einer Weiterbildung mehrere Ladestationen aufweisen, die sich durch das Energieversorgungsnetz elektrisch bzw. ladetechnisch nicht unterscheiden lassen, z.B. weil sie an dem gleichen Stromverteiler oder Stromzähler angeschlossen sind.

Es ist eine Weiterbildung, dass die Position und ggf. die zugehörige Positionsgenauigkeit eines bestimmten Elektrofahrzeugs mittels einer Positionsbestimmungsvorrichtung dieses Elektrofahrzeugs bestimmt wird, z.B. beruhend auf GPS, GLONASS, WLAN, usw. Die Positionsgenauigkeit kann von der in dem Elektrofahrzeug verbauten Positionsbestimmungsvorrichtung (z.B. genaueres oder weniger genaues GPS) und/oder der von dem Elektrofahrzeug verwendeten Ortungstechnologie (z.B. GPS, WLAN, usw.) abhängen. Die Positionsbestimmungsvorrichtung des Elektrofahrzeugs und/oder seine Ortungstechnologie können in einer Weiterbildung ebenfalls per Fernidentifikation abgefragt werden.

Es auch möglich, dass typische Positionsgenauigkeiten für bestimmte Bereiche eines Energieversorgungsnetzes vorbekannt bzw. vorgegeben sind. Solche Positionsgenauigkeiten können beispielsweise durch Versuche oder Messungen repräsentativ ermittelt worden sein.

Beispielsweise aus den Positions(un)genauigkeiten der Elektrofahrzeuge und den mindestens einen Ladestationen in der Nähe der jeweiligen Elektrofahrzeuge sowie ggf. weiteren Informationen wie einer Länge eines Ladekabels usw. können Wahrscheinlichlichkeiten für die Elektrofahrzeuge bestimmt werden, dass sie zum Laden an eine Ladestation des ersten Energieversorgungsnetzes angeschlossen sind. Der Flottenbetreiber kann unter Kenntnis zumindest dieser Wahrscheinlichkeiten bestimmen oder festsetzen, für welche Elektrofahrzeuge angenommen wird, dass sie an das erste Energieversorgungsnetz angeschlossen sind, und der Flottenbetreiber kann die Ladevorgänge dieser Elektrofahrzeuge an die empfangene Energieanforderungsinformation und damit an seine Ladestrategie anpassen, falls möglich und/oder sinnvoll. Tendenziell kann der Flottenbetreiber z.B. Elektrofahrzeuge eher dann einer Ladestation des ersten Energieversorgungsnetzes zuordnen, je höher deren Wahrscheinlichkeiten dafür sind.

Es ist eine Ausgestaltung, dass einem Elektrofahrzeug Wahrscheinlichkeitswerte, dass es an einer bestimmten Ladestation des ersten Energieversorgungsnetzes angeschlossen ist, zugeordnet werden, wobei die Wahrscheinlichkeitswerte abhängig zumindest von einem ermittelten Abstand zwischen dem Elektrofahrzeug und dieser Ladestation sind. In anderen Worten ist einem bestimmten Elektrofahrzeug eine Verknüpfung zwischen einer Wahrscheinlichkeit eines Anschlusses an eine Ladestation des Energieversorgungsnetzes in der Nähe des Elektrofahrzeugs in Abhängigkeit von dem Abstand zu der Ladestation zugeordnet. Die Wahrscheinlichkeitswerte können z.B. experimentell, beruhend auf Erfahrungswerten und/oder durch Simulationen bestimmt werden bzw. worden sein.

Die Wahrscheinlichkeitswerte können als abstandsabhängige Kurve aufgetragen werden. Die Wahrscheinlichkeitswerte können z.B. als Tabelle, Kennlinie, usw. vorliegen, z.B. abgespeichert sein.

Es ist eine Ausgestaltung, dass ein Wahrscheinlichkeitswert umso größer ist, je geringer der Abstand zwischen dem Elektrofahrzeug und der Ladestation ist.

Es ist eine Ausgestaltung, dass die Wahrscheinlichkeitswerte abhängig von einer von dem betreffenden Elektrofahrzeug verwendeten Positionsbestimmungsvorrichtung und/oder Ortungstechnologie bzw. deren Genauigkeit(en) sind. Dadurch können die Wahrscheinlichkeiten realitätsnäher bestimmt werden. Die Wahrscheinlichkeitswerte sind dann typischerweise fahrzeugabhängig bzw. -inhärent und z.B. vom Typ und/oder der Ausstattung des fernidentifizierbaren elektrisch betriebenen Elektrofahrzeugs abhängig sein. Elektrofahrzeugen mit gleicher Positionsbestimmungsvorrichtung und/oder Ortungstechnologie können in einer Variante gleiche Wahrscheinlichkeitswerte zugeordnet sein.

Es ist eine Ausgestaltung, dass die Wahrscheinlichkeitswerte abhängig von einer Genauigkeit der Kenntnis der Position der mindestens einen Ladestation sind. Auch dadurch lässt sich die Kenntnis über die Wahrscheinlichkeit für einen Anschluss eines bestimmten Elektrofahrzeugs an einer Ladestation verbessern. Wie bereits oben angedeutet, kann diese Position vergleichsweise genau oder aber nur sehr ungenau bekannt sein, in letzteren Fall z.B. lediglich innerhalb einer Gehäusebreite oder einer Länge eines Straßenzugs, in einer hohen Gehäuseschlucht usw.

In einer Weiterbildung werden nur solche Ladestationen betrachtet, für die eine bestimmte Mindestwahrscheinlichkeit vorliegt, z.B. von mindestens 1 % oder 5 %. Eine 1-zu-1-Zuodnung kann andererseits in einer Weiterbildung dann angenommen werden, wenn die Wahrscheinlichkeit einen oberen Wahrscheinlichkeitsschwellwert erreicht oder überschreitet, z.B. von 98 % oder 99 %.

Es ist eine Weiterbildung, dass nur solche Ladestationen betrachtet werden, deren Abstand innerhalb eines vorgegebenen maximalen Abstands liegen. Dieser maximale Abstand kann z.B. ca. 10 m betragen und damit übliche Längen von Ladekabeln umfassen.

Es ist eine Ausgestaltung, dass die Wahrscheinlichkeit, dass ein Elektrofahrzeug an eine Ladestation eines Energieversorgungsnetzes angeschlossen ist, von der Zahl der in der Nähe befindlichen Ladestationen des ersten Energieversorgungsnetzes abhängt. Diese Ausgestaltung ist besonders vorteilhaft für den Fall, dass durch den Betreiber bzw. Stromversorger nicht unterscheidbar ist, an welche Ladestation einer Gruppe von Ladestationen des Energieversorgungsnetzes das Elektrofahrzeug anschlossen ist, z.B. weil mehrere Ladestationen über den gleichen Stromverteiler mit Strom versorgt werden. Ein solches Szenario kann beispielsweise vorliegen, wenn an einem Straßenzug mehrere Ladestationen, z.B. Schuko-Stecker, über eine gemeinsame Stromversorgungsleitung an einen gemeinsamen Stromverteiler angeschlossen sind und für den Betreiber des Energieversorgungsnetzes keine weitere Möglichkeit besteht, den Anschluss eines Elektrofahrzeugs einer bestimmten dieser Ladestationen zuzuordnen. An je mehr solcher Ladestationen ein Elektrofahrzeug angeschlossen sein könnte, desto höher wird in einer Weiterbildung tendenziell die Wahrscheinlichkeit, dass das Elektrofahrzeug an eine dieser möglichen Ladestationen angeschlossen sein könnte. Die Ladestationen, an die das Elektrofahrzeug angeschlossen sein kann oder könnte, kann solche Ladestationen ausschließen, an denen ein anderes Elektrofahrzeug sicher angeschlossen ist. Die Wahrscheinlichkeit, dass ein Elektrofahrzeug an irgendeine Ladestation des ersten Energieversorgungsnetzes angeschlossen ist, kann beispielsweise durch eine Verknüpfung oder "Kumulation" der einzelnen Wahrscheinlichkeiten für einen möglichen Anschluss an die jeweils betrachteten Ladestation berechnet werden.

Es ist eine Weiterbildung, dass Ladestationen eines anderen, zweiten Energieversorgungsnetzes in der Nähe des Elektrofahrzeugs bei der Berechnung der Wahrscheinlichkeit, aus dem ersten Energieversorgungsnetz geladen zu werden, nicht berücksichtigt werden. Dies ergibt den Vorteil einer besonders einfachen Berechnung.

Es ist eine Ausgestaltung, dass die (Gesamt-)Wahrscheinlichkeit P (F), dass ein Elektrofahrzeug F an (irgend) eine Ladestation $L_i$ aus einer Gruppe von n = 1, 2, 3, 4, ... möglichen Ladestationen $L_i$ des ersten Energieversorgungsnetzes in der Nähe des Elektrofahrzeugs F angeschlossen ist, gemäß

$$P\left(F\right) = 1 - \prod_{i=1}^{n}\left(1 - P\left(L_i, d_i\right)\right)$$

mit P ($L_i$, $d_i$) der Wahrscheinlichkeit eines Anschlusses des Elektrofahrzeugs an die Ladestation $L_i$, welche sich in einer Entfernung $d_i$ zu dem Elektrofahrzeug F befindet, berechnet wird. Diese Berechnungsvariante ergibt den Vorteil, dass sich die Wahrscheinlichkeit P (F) mit jeder möglichen Ladestation Li in der Nähe erhöht, aber der Wert P (F) = 1 bzw. 100 % nicht erreicht oder überschritten wird. Befindet sich nur eine einzige Ladestation L in der Nähe, und gilt also n = 1, ergibt sich direkt P (F) = P (L, d), d.h., der für diesen Abstand d gültige Widerstandswert.

Diese Wahrscheinlichkeit P (F) kann dazu genutzt werden, einzustufen, ob das Elektrofahrzeug F dem ersten Energieversorgungsnetz zugeordnet werden soll, oder nicht.

So ist es eine Weiterbildung, dass nur Elektrofahrzeuge dem ersten Energieversorgungsnetz zugeordnet werden oder werden können, für die P (F) > 0,5 oder P (F) ≥ 0,5 gilt.

Können mehrere Elektrofahrzeuge an eine bestimmte Ladestation angeschlossen sein, ist es eine Weiterbildung, dass durch den Flottenbetreiber entschieden wird, dass das Elektrofahrzeug mit der höchsten Wahrscheinlichkeit als an diese Ladestation angeschlossen eingestuft wird.

Können a Elektrofahrzeuge an b Ladestationen des gleichen Energieversorgungsnetzes mit a > b angeschlossen sein, ist es eine Weiterbildung, dass durch den Flottenbetreiber entschieden wird, dass die b Elektrofahrzeuge mit den höchsten Wahrscheinlichkeiten als an diese Ladestationen bzw. an dieses Energieversorgungsnetz angeschlossen eingestuft werden.

Es ist eine Ausgestaltung, dass die Wahrscheinlichkeit P (F), dass ein Elektrofahrzeug F an (irgend)eine Ladestation $L_i$ aus einer Gruppe möglicher Ladestationen $L_i$ des ersten Energieversorgungsnetzes in der Nähe des Elektrofahrzeugs F angeschlossen ist, unter zusätzlicher Berücksichtigung von m = 1, 2, 3, 4, .... Ladestationen $N_j$ eines dazu benachbarten zweiten Energieversorgungsnetzes in der Nähe des Elektrofahrzeugs F berechnet wird. So wird der Vorteil erreicht, dass die Wahrscheinlichkeit P (F) noch genauer bestimmbar ist.

Dabei kann die Berechnung so gestaltet sein, dass sich die Wahrscheinlichkeit P (F) für einen Anschluss an eine Ladestation $L_i$ des ersten Energieversorgungsnetzes verringert, wenn die Wahrscheinlichkeit besteht, dass das Elektrofahrzeug F an mindestens eine Ladestation $N_j$ zweiten Energieversorgungsnetzes angeschlossen sein könnte.

Es ist eine Ausgestaltung, dass die Wahrscheinlichkeit P (F), dass ein bestimmtes Elektrofahrzeug F an eine Ladestation $L_i$ aus einer Gruppe von Ladestation $L_i$ des ersten Energieversorgungsnetzes in der Nähe des Elektrofahrzeugs F angeschlossen ist und sich zudem in der Nähe einer Gruppe von Ladestation $N_j$ eines zweiten Energieversorgungsnetzes befindet, gemäß

$$P\left(F\right) = \left[1 - \prod_{i=1}^{n}(1 - P\left(L_i, d_i\right))\right] \cdot \prod_{j=1}^{m}(1 - P\left(N_j, d_j\right))$$

mit $P\left(L_i, d_i\right)$ der Wahrscheinlichkeit eines Anschlusses des Elektrofahrzeugs F an eine jeweilige Ladestation $L_i$, welche sich in einer Entfernung $d_i$ zu dem Elektrofahrzeug F befindet, und $P\left(N_j, d_j\right)$ der Wahrscheinlichkeit eines Anschlusses des Elektrofahrzeugs F an eine jeweilige Ladestation $N_j$, die sich in einer Entfernung $d_j$ zu dem Elektrofahrzeug F befindet, berechnet wird.

Es ist eine Ausgestaltung, dass zur Einstufung durch den Flottenbetreiber, ob ein bestimmtes Elektrofahrzeug F aus dem ersten Energieversorgungsnetz lädt bzw. an eine Ladestation $L_i$ des ersten Energieversorgungsnetzes in der Nähe des Elektrofahrzeugs F angeschlossen ist oder nicht, zunächst die Wahrscheinlichkeit $P_1\left(F\right)$ für einen Anschluss an in der Nähe befindlichen Ladestationen $L_i$ berechnet wird, ohne Ladestationen $N_j$ des zweiten Energieversorgungsnetzes in der Nähe des Elektrofahrzeugs F zu betrachten, also

$$P_1\left(F\right) = 1 - \prod_{i=1}^{n}(1 - P\left(L_i, d_i\right))$$

Zusätzlich wird die Wahrscheinlichkeit $P_2\left(F\right)$ für einen Anschluss an in der Nähe befindlichen Ladestationen $N_j$ des zweiten Energieversorgungsnetzes berechnet, ohne Ladestationen $L_i$ des ersten Energieversorgungsnetzes in der Nähe des Elektrofahrzeugs F zu betrachten, also

$$P_2\left(F\right) = 1 - \prod_{j=1}^{m}(1 - P\left(N_j, d_j\right))$$

Das Elektrofahrzeug F kann z.B. dann als an dem ersten Energieversorgungsnetzes ladend eingestuft werden, wenn $P_1 > P_2$ gilt.

In einer Weiterbildung können mit einer bestimmten Ladestation $L_i$ Wahrscheinlichkeiten zur Zugehörigkeit zu unterschiedlichen Energieversorgungsnetzen assoziiert sein. Dies kann bspw. hilfreich sein für Ladestationen, für die keine Netzzugehörigkeitsdaten vorliegen. In diesem Fall kann die Wahrscheinlichkeit eines Anschlusses eines Elektrofahrzeugs F an eine Ladestation $L_i$ z.B. gemäß

$$P\left(F\right) = 1 - \prod_{i=1}^{n}(1 - (P'\left(L_i, d_i\right))$$

berechnet werden, wobei $P'\left(L_i, d_i\right) = P\left(L_i, d_i\right) \cdot \Phi^*\left(L_i\right) \cdot (1 - \Phi^{\circ}\left(Li\right))$ gesetzt wird, wobei $\Phi^*\left(L_i\right)$ eine Wahrscheinlichkeit angibt, dass $L_i$ zu dem ersten Energieversorgungsnetzwerk gehört und $\Phi^*\left(L_i\right)$ eine Wahrscheinlichkeit angibt, dass die Ladestation $L_i$ zu dem zweiten Energieversorgungsnetzwerk gehört. Dies kann analog auf anderen obigen Berechnungen der Wahrscheinlichkeitswerte übertragen werden.

In einer Weiterbildung kann durch den Flottenbetreiber ein Netzverhalten für Ladungen durch eine Gruppe von Elektrofahrzeugen simuliert werden, für das die sich aus der empfangenen Energieanforderungsinformation ergebenden Randbedingungen einhalten werden, insbesondere eine vorgegebene an den Ladestationen des Energieversorgungsnetzes maximal anrufbare Energiemenge ("Energiepuffer"). Dabei können im Rahmen dieser Simulation den Ladestationen bzw. Elektrofahrzeugen zugewiesene Energiemengen variiert werden, um die Randbedingungen mit hoher Wahrscheinlichkeit zu erfüllen. Diese Variation kann Ladeeigenschaften einzelner Elektrofahrzeuge berücksichtigen. Die Randbedingungen können beispielsweise das Eintreten bestimmter den Energiepuffer beeinflussender Vorgänge oder "Events" umfassen, so dass durch die Simulation bei Eintritt solcher Vorgänge abgeschätzt werden kann, wie sich das Netzverhalten ändert und wie es durch Änderung der den Ladestationen zugewiesenen Energiemengen verbessert werden kann. Solche Events können z.B. den Ausfall oder das Zuschalten von Energieerzeugungseinheiten (Kraftwerke, Solaranlagen, usw.), den Ausfall von Stromtrassen, den gestiegenen oder gesunkenen Energieverbrauch anderer Verbraucher des Energieversorgungsnetzes, usw. umfassen. Die Simulationen können für unterschiedliche Gruppen von Elektrofahrzeugen durchgeführt werden, die sich z.B. durch die Zahl und/oder Art der betrachteten Elektrofahrzeuge unterscheiden. Die Simulationen können durch Vergleich mit einem realen Netzverhalten, einschließlich ggf. dem Eintreten bestimmter Events, unter Kenntnis der an den Ladestationen abgerufenen Energiemengen weiter verbessert werden.

Je besser die Ladeeigenschaften der an das Energieversorgungsnetz angeschlossenen Elektrofahrzeuge bekannt ist, desto besser kann das Energieversorgungsnetz beruhend auf Simulationsergebnissen auf ein Event reagieren. Dies ist insbesondere der Fall, wenn nur mit einer gewissen Wahrscheinlichkeit an die Ladestationen angeschlossene Elektrofahrzeuge für eine Ladung ihres Energiespeichers gegenüber solchen Elektrofahrzeugen bevorzugt werden, von denen praktisch sicher ist, dass sie an Ladestationen angeschlossen sind, z.B. aufgrund einer einfacheren Einhaltung von vertraglich vereinbarten Ladekonditionen, einer schnelleren Ladung, einer Lebenszeit des Energiespeichers, usw. Solche Elektrofahrzeuge können beispielsweise mit einem von der Wahrscheinlichkeit ihres Anschlusses an die Ladestation abhängigen Gewichtungsfaktor berücksichtigt werden.

Die Aufgabe wird auch gelöst durch ein Ladesteuerungssystem, das dazu eingerichtet ist, das oben beschriebene Verfahren durchzuführen. Das Ladesystem kann analog zu dem Verfahren ausgebildet werden, und umgekehrt, und weist die gleichen Vorteile auf.

Es ist eine Ausgestaltung, dass das Ladesteuerungssystem eine Datenverarbeitungseinrichtung aufweist, welche dazu eingerichtet ist, das oben beschriebene Verfahren durchzuführen. Das Ladesteuerungssystem kann von einem Flottenbetreiber betrieben werden.

Das Ladesteuerungssystem kann beispielsweise dazu eingerichtet sein,

- von einem Betreiber eines ersten Energieversorgungsnetzes eine Energieanforderungsinformation zu empfangen;
- aktuell ladende Elektrofahrzeugen in der Nähe des ersten Energieversorgungsnetzes bzw. in der Nähe der Ladestationen des ersten Energieversorgungsnetzes anhand ihrer Positionen zu identifizieren;
- nicht eindeutig dem ersten Energieversorgungsnetz zuordenbaren Elektrofahrzeugen eine Wahrscheinlichkeit zuzuordnen, dass sie an das erste Energieversorgungsnetz bzw. eine Ladestation davon angeschlossen sind;
- beruhend auf den Wahrscheinlichkeiten zu bestimmen, welche dieser Elektrofahrzeuge als an eine Ladestation des ersten Energieversorgungsnetzes angeschlossen eingestuft werden,
- eine z.B. aus den oben beschriebenen Simulationen abgeleitete Ladestrategie für die an dem ersten Energieversorgungsnetz ladenden Elektrofahrzeuge auszuwählen, welche der Energieanforderungsinformation entgegenkommt, insbesondere diese erfüllt,
- die ladenden Elektrofahrzeuge fernanzuweisen, ihre Ladevorgänge gemäß der ausgewählten Ladestrategie und damit auch beruhend auf der empfangenen Energieanforderungsinformation anzupassen bzw. zu variieren.

Die Aufgabe wird auch gelöst durch ein Computerprogrammprodukt, aufweisend Code, der, wenn er auf einer Datenverarbeitungseinrichtung, insbesondere des Ladesteuerungssystems, durchgeführt wird, das oben beschriebene Verfahren durchführt.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden schematischen Beschreibung eines Ausführungsbeispiels, das im Zusammenhang mit der Zeichnung näher erläutert wird.

Fig.1    zeigt einen möglichen Ablauf zum Laden von an Ladestationen eines Energieversorgungsnetzes angeschlossenen Elektrofahrzeugen; und

Fig.2    zeigt eine Auftragung von Wahrscheinlichkeitswerten für einen Anschluss zweier unterschiedlicher Elektrofahrzeuge an eine bestimmte Ladestation gegen einen jeweiligen Abstand zu der Ladestation.

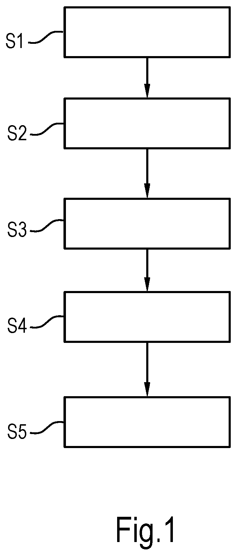

**Fig.1** zeigt einen möglichen Ablauf zum Anpassen von Ladevorgängen von Elektrofahrzeugen durch einen ein Flottenbetreiber dieser Elektrofahrzeuge.

In einem ersten Schritt S1 wird bei dem Flottenbetreiber eine Energieanforderungsinformation von einem Betreiber eines ersten Energieversorgungsnetzes empfangen, z.B. dass durch ein gewisses Event die bisher zur Verfügung stehende Ladeleistung für die Elektrofahrzeuge des Flottenbetreibers kurzfristig reduziert ist oder wird. Alternativ könnte z.B. mitgeteilt werden, dass nun mehr Ladeleistung zur Verfügung steht.

Nun versucht der Flottenbetreiber festzustellen, welche Elektrofahrzeuge seiner Flotte aktuell aus dem ersten Energieversorgungsnetz laden. Dazu gehören eindeutig alle Elektrofahrzeuge, die in einer 1-zu-1-Beziehung zu einer Ladestation des ersten Energieversorgungsnetzes stehen und alle Elektrofahrzeuge, die sich eindeutig innerhalb der geographischen Ausdehnung bzw. Fläche des ersten Energieversorgungsnetzes befinden. Für ein Fahrzeug können eine oder beide Bedingungen zutreffen.

Der Flottenbetreiber versucht zusätzlich, Elektrofahrzeuge zu berücksichtigen, welche möglicherweise bzw. nur mit einer gewissen Wahrscheinlichkeit aus dem ersten Energieversorgungsnetz laden. Dazu identifiziert der Flottenbetreiber in einem Schritt S2 aktuell ladenden Elektrofahrzeugen der Flotte, die sich in der Nähe des ersten Energieversorgungsnetzes befinden und nicht eindeutig einer Ladestation zugeordnet sind, also an das erste Energieversorgungsnetz angeschlossen sein könnten, ohne dass der Flottenbetreiber dies eindeutig feststellen kann.

In einem Schritt S3 ordnet der Flottenbetreiber den in Schritt S2 identifizierten Elektrofahrzeugen jeweilige Wahrscheinlichkeiten zu, dass sie aus dem ersten Energieversorgungsnetz laden, z.B. indem sie an eine Ladestation des ersten Energieversorgungsnetzes angeschlossen sind.

In einem Schritt S4 stuft der Flottenbetreiber jedes der in den Schritten S2 und S3 betrachteten Elektrofahrzeuge beruhend auf den zugehörigen Wahrscheinlichkeiten als aus dem ersten Energieversorgungsnetzes ladend oder nicht aus dem ersten Energieversorgungsnetzes ladend ein.

In einem Schritt S5 werden die Ladevorgänge der eindeutig dem ersten Energieversorgungsnetz zugehörigen Elektrofahrzeuge als auch die Ladevorgänge der in Schritt S4 als aus dem ersten Energieversorgungsnetzes ladend eingestuften Elektrofahrzeuge beruhend auf der empfangenen Energieanforderungsinformation anpasst, z.B. gemäß einer Ladestrategie, die im Rahmen eines Energieversorgungsmanagements aus Simulationen gewonnen wurde und am besten auf die durch die Energieanforderungsinformation bestimmten Randbedingungen des ersten Energieversorgungsnetzes abgestimmt ist.

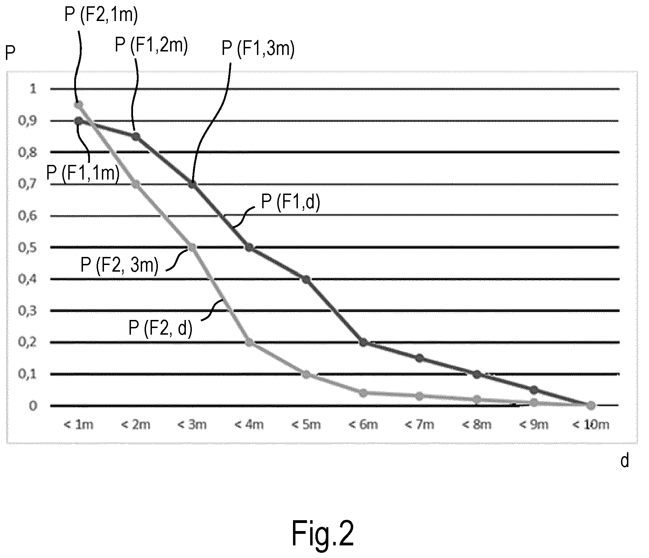

**Fig.2** zeigt eine Auftragung von rein beispielhaften Kurven von Wahrscheinlichkeiten bzw. Wahrscheinlichkeitswerten P (F1, d) bzw. P (F2, d) für einen Anschluss von fernidentifizierbaren Elektrofahrzeugen F1 und F2 mit unterschiedlichen Positionsbestimmungsvorrichtungen bzw. Ortungstechnologien an eine Ladestation gegen einen festgestellten Abstand d zu der Ladestation. Diese Wahrscheinlichkeitskurven können z.B. dazu verwendet werden, den Elektrofahrzeugen F1, F2 gemäß Schritt S3 jeweilige Wahrscheinlichkeiten P (F1), P (F2) zuzuordnen.

Die Wahrscheinlichkeitswerte P (F1, d) bzw. P (F2, d) können in einer Weiterbildung von den Elektrofahrzeugen F1, F2 abgerufen werden, alternativ nach Ermittlung der VINs der Elektrofahrzeuge aus einer Datenbank abgerufen werden. Die Wahrscheinlichkeitswerten P (F1, d) und P (F2, d) können in einer Weiterbildung für die gleichen Elektrofahrzeuge F1, F2 für unterschiedliche Ladestationen unterschiedlich sein, z.B. für Ladestationen an anderen Straßenzügen oder Ortsteilen, da sich dort ggf. die Positionen der Elektrofahrzeuge F1, F2 und/oder die Positionen der Ladestationen genauer oder ungenauer bestimmen lassen.

Wird beispielsweise für das Elektrofahrzeug F1 gemessen, dass es sich innerhalb eines Abstands von 1 m zu der Ladestation (entsprechend d < 1 m oder d ≤ 1 m) befindet, wird dem Elektrofahrzeug F1 der Wahrscheinlichkeitswert P (F1, d) = P (F1, 1 m) = 0,9 zugeordnet. Analog werden dem Elektrofahrzeug F1 bei den Abständen d < 2 m, 3 m, 4 m, 5 m, usw. die Wahrscheinlichkeitswerte 0,85, 0,8, 0,7, 0,5 bzw. 0,4 usw. zugeordnet. Dem Elektrofahrzeug F2 werden entsprechende Wahrscheinlichkeitswerte P (F2, d) zugeordnet.

In einem Scenario sei angenommen, dass sich die beiden Elektrofahrzeuge F1 und F2 in der Nähe einer einzigen Ladestation befinden, beispielsweise mit dem gleichen gemessenen bzw. bestimmten Abstand von d < 3 m. Dem Elektrofahrzeug F1 wird daher in Schritt S3 eine dem Wahrscheinlichkeitswert P (F1, 3 m) = 0,7 entsprechende Wahrscheinlichkeit P (F1) zugeordnet, dem Elektrofahrzeug F2 eine dem Wahrscheinlichkeitswert P (F2, 3 m) = 0,5 entsprechende Wahrscheinlichkeit P (F2).

Da die Wahrscheinlichkeit P (F1) für Elektrofahrzeug F1 also höher ist als die Wahrscheinlichkeit P (F2) für Elektrofahrzeug F2, wird Elektrofahrzeug F1 bevorzugt und folglich in Schritt S4 die Einstufung vorgenommen, dass Elektrofahrzeug F1 an die Ladestation angeschlossen ist, Elektrofahrzeug F2 hingegen nicht.

Daher wird durch den Flottenbetreiber in Schritt S5 nur der Ladevorgang von Elektrofahrzeug F1 angepasst.

Das Verfahren bzw. ein entsprechendes Ladesystem kann in einer Variante so ausgebildet sein, dass weitere Ladestationen in der Nähe der Elektrofahrzeuge F1 und F2 (hier z.B. innerhalb eines Radius von 10 m) berücksichtigt werden, die ebenfalls zu dem betrachteten ersten Energieversorgungsnetz gehören.

Die kumulierte Wahrscheinlichkeit P, dass ein Elektrofahrzeug an eine Ladestationen aus einer Gruppe von z.B. zwei Ladestationen (hier als $L_1$ und $L_2$ bezeichnet) angeschlossen ist, kann dann zu $P = 1 - (1 - P(L_1, d_1)) \cdot (1 - P(L_2, d_2))$ berechnet werden, wobei $d_1$ den Abstand zu der Ladestation $L_1$ und $d_2$ den Abstand zu der Ladestation $L_2$ bezeichnet. Befindet sich beispielsweise Elektrofahrzeug F1 in einem Abstand $d_1 = 3$ m von der Ladestation L1 und in einem Abstand $d_2 = 4$ m von der Ladestation $L_2$, kann die Wahrscheinlichkeit P (F1), dass das Elektrofahrzeug F1 an (irgend)eine der beiden Ladestationen $L_1$, $L_2$ angeschlossen ist, als

$$P (F1) = 1 - (1 - P(L_1, d_1)) \cdot (1 - P (L_2, d_2)) = 1 - (1 - 0,7) \cdot (1 - 0,5) = 1 - 0,3 \cdot 0,5 = 0,85$$

berechnet werden. Dies ist ebenfalls höher als die Wahrscheinlichkeit P (F2) von 0,5, falls das Elektrofahrzeug F2 sich weiterhin nur in der Nähe einer einzigen Ladestation befindet. Somit würde weiterhin angenommen, dass Elektrofahrzeug F1 an eine der Ladestationen $L_1$, $L_2$ angeschlossen ist, und nicht Elektrofahrzeug F2. Bei dieser Berechnung erhöht sich die Wahrscheinlichkeit für ein bestimmtes Elektrofahrzeug mit der Zahl der möglichen angeschlossenen Ladestationen.

Dieses Schema zur Berechnung der (Gesamt-)Wahrscheinlichkeit P (F) eines Anschlusses an das erste Energieversorgungsnetz kann für ein bestimmtes Elektrofahrzeug F analog auf beliebig viele Ladestationen $L_i$ mit i = 1, ..., n und deren von den Abständen $d_i$ abhängigen einzelnen Wahrscheinlichkeiten P ($L_i$, $d_i$) gemäß

$$P\left(F\right) = 1 - \prod_{i=1}^{n}(1 - P\left(L_i, d_i\right))$$

erweitert werden.

In den obigen Berechnungen der Wahrscheinlichkeiten sind Ladestationen eines zweiten, benachbarten Energieversorgungsnetzes nicht berücksichtigt. Die macht die Berechnungen besonders einfach und schnell und ermöglicht auch eine konsistente Berechnung, wenn die Ladestationen des zweiten Energieversorgungsnetzes dem Flottenbetreiber nicht bekannt sind.

Jedoch können die Wahrscheinlichkeiten auch unter Berücksichtigung von Ladestationen $N_j$ mit $j = 1, ..., m$ des zweiten Energieversorgungsnetzes berechnet werden. Dies ist besonders vorteilhaft, falls das zweite Energieversorgungsnetz möglichst nicht durch Ladevorgänge von falsch an dem ersten Energieversorgungsnetz ladend eingestuften Elektrofahrzeugen beeinflusst werden soll. In der folgenden Weiterbildung des obigen Beispiels seien dazu Ladestationen des zweiten Energieversorgungsnetzes als $N_3$, $N_4$, ... bezeichnet. Es sei nun angenommen, dass sich Elektrofahrzeug F1 zusätzlich in einem Abstand $d_3 < 2$ m zu der Ladestation $N_3$ und in einem Abstand $d_4 < 3$ m zu der Ladestation $N_4$ befinde. Ferner sei angenommen, dass Elektrofahrzeug F2 einen Abstand $d_3 < 10$ m zu Ladestation $N_3$ aufweist. Dann kann für jedes der beiden Elektrofahrzeuge F1 und F2 eine (Gesamt-)Wahrscheinlichkeit bzw. Indikation gemäß

$P\left(F1\right) = [1 - (1 - P\left(L_1, d_1\right)) * (1 - P\left(L_2, d_2\right))] * (1 - P\left(N_3, d_3\right)) * (1 - P\left(N_4, d_4\right)) = 0,85 * (1 - 0,85) * (1 - 0,7) = 0,85 * 0,15 * 0,3 = 0,03825$

und

$$P\left(F2\right) = 0,5 \cdot (1 - P\left(N_3, d_3\right)) = 0,5 \cdot (1 - 0) = 0,5$$

berechnet, die in dem vorliegenden Beispiel hilft, sich für das Elektrofahrzeug F2 zu entscheiden, da $P(F2) > P(F1)$ ist. Die Wahrscheinlichkeit P (F1), dass Elektrofahrzeug F1 an das erste Energieversorgungsnetz angeschlossen ist, verringert sich also, weil es auch an Ladestationen des zweiten Energieversorgungsnetzes angeschlossen sein könnte.

Eine solche Wahrscheinlichkeit P (F) kann für Ladestationen $N_j$ mit $j = 1, ..., m$ allgemein berechnet werden zu:

$$P\left(F\right) = [1 - \prod_{i=1}^{n}(1 - P\left(L_i, d_i\right))] \cdot \prod_{j=1}^{m}(1 - P\left(N_j, d_j\right)$$

Allgemein werden bei dieser Berechnung also die Wahrscheinlichkeiten für einen Anschluss eines bestimmten Elektrofahrzeugs F an eine Ladestation eines Energieversorgungsnetzes reduziert, wenn dieses Elektrofahrzeug auch an Ladestationen eines anderen Energieversorgungsnetzes angeschlossen sein könnte.

Ferner können mit einer bestimten Ladestation Wahrscheinlichkeitswerte assoziiert sein, die darüber Aufschluss geben, mit welcher Wahrscheinlichkeit diese mit unterschiedlichen Energieversorgungsnetzen verbunden sind. Dies kann bspw. hilfreich sein für Ladestationen, für die keine Netzzugehörigkeitsdaten vorliegen. In diesem Fall kann die Wahrscheinlichkeit eines Anschlusses eines Elektrofahrzeugs F an eine Ladestation $L_i$ z.B. gemäß

$$P\left(F\right) = 1 - \prod_{i=1}^{n}(1 - (P'(L_i, d_i))$$

berechnet werden, wobei $P'(L_i, d_i) = P(L_i, d_i) \cdot \Phi^*(L_i) \cdot (1 - \Phi^\circ(Li)$ gesetzt wird, wobei $\Phi^*(L_i)$ eine Wahrscheinlichkeit angibt, dass $L_i$ zu einem ersten Energieversorgungsnetzwerk bzw. Ladenetzwerk gehört, während $\Phi^\circ(L_i)$ eine Wahrscheinlichkeit angibt, dass die Ladestation $L_i$ zu einem zweiten Energieversorgungsnetzwerk bzw. Ladenetzwerk gehört.

Selbstverständlich ist die vorliegende Erfindung nicht auf das gezeigte Ausführungsbeispiel beschränkt.

Allgemein kann unter "ein", "eine" usw. eine Einzahl oder eine Mehrzahl verstanden werden, insbesondere im Sinne von "mindestens ein" oder "ein oder mehrere" usw., solange dies nicht explizit ausgeschlossen ist, z.B. durch den Ausdruck "genau ein" usw.

**Bezugszeichenliste**

d          Abstand

S1-S5     Verfahrensschritte

P          Wahrscheinlichkeit

P (F1)     Wahrscheinlichkeitskurve für Elektrofahrzeug F1

P (F2)     Wahrscheinlichkeitskurve für Elektrofahrzeug F2

P (F1, d)  Wahrscheinlichkeitswert für Elektrofahrzeug F1 im Abstand d zu einer Ladestation

P (F2, d)  Wahrscheinlichkeitswert für Elektrofahrzeug F2 im Abstand d zu einer Ladestation

**Patentansprüche**

1.  Computerimplementiertes Verfahren (S1-S5) zum Anpassen von Ladevorgängen von Elektrofahrzeugen (F1, F2), bei dem ein Flottenbetreiber einer Flotte von Elektrofahrzeugen

    - eine Energieanforderungsinformation von einem Betreiber eines ersten Energieversorgungsnetzes empfängt (S1);
    - aktuell ladenden Elektrofahrzeugen (F1, F2) der Flotte, die sich in der Nähe des ersten Energieversorgungsnetzes befinden und nicht eindeutig einer Ladestation zugeordnet sind, eine Wahrscheinlichkeit (P(F1), P(F2)) zuordnet, dass sie aus dem ersten Energieversorgungsnetz laden (S2, S3);
    - beruhend auf diesen Wahrscheinlichkeiten die Elektrofahrzeuge (F1, F2) als aus dem ersten Energieversorgungsnetzes ladend oder nicht aus dem ersten Energieversorgungsnetzes ladend einstuft (S4) und
    - die Ladevorgänge der als aus dem ersten Energieversorgungsnetzes ladend eingestuften Elektrofahrzeuge beruhend auf der empfangenen Energieanforderungsinformation anpasst (S5).

2.  Verfahren (S1-S5) nach Anspruch 1, bei dem einem Elektrofahrzeug (F1, F2) Wahrscheinlichkeitswerte (P(F1, d), P (F2, d)), dass es an einer bestimmten Ladestation des ersten Energieversorgungsnetzes angeschlossen ist, zugeordnet werden (S3), wobei diese Wahrscheinlichkeitswerte (P(F1, d), P (F2, d)) abhängig zumindest von einem ermittelten Abstand (d) zwischen dem Elektrofahrzeug (F1, F2) und dieser Ladestation sind.

3.  Verfahren (S1-S5) nach Anspruch 2, bei dem ein Wahrscheinlichkeitswert (P(F1, d), P (F2, d)) umso größer ist, je geringer der Abstand (d) zwischen dem Elektrofahrzeug (F1, F2) und der Ladestation ist.

4.  Verfahren (S1-S5) nach einem der Ansprüche 2 bis 3, bei dem die Wahrscheinlichkeitswerte (P(F1, d), P (F2, d)) abhängig von einer von dem betreffenden Elektrofahrzeug (F1, F2) verwendeten Positionsbestimmungsvorrichtung und/oder Ortungstechnologie sind.

5.  Verfahren (S1-S5) nach einem der Ansprüche 2 bis 4, bei dem die Wahrscheinlichkeitswerte (P(F1, d), P (F2, d)) abhängig von einer Genauigkeit der Kenntnis der Position der mindestens einen Ladestation sind.

6.  Verfahren (S1-S5) nach einem der Ansprüche 2 bis 5, bei dem die Wahrscheinlichkeit, dass ein Elektrofahrzeug (F1, F2) eine Ladestation des ersten Energieversorgungsnetzes angeschlossen ist, von der Zahl der in der Nähe des Elektrofahrzeug (F1, F2) befindlichen Ladestationen des ersten Energieversorgungsnetzes abhängt.

7.  Verfahren (S1-S5) nach Anspruch 6, bei dem die Wahrscheinlichkeit P (F), dass ein Elektrofahrzeug an eine Ladestation $L_i$ aus einer Gruppe von Ladestationen $L_i$ des ersten Energieversorgungsnetzes in der Nähe des Elektrofahrzeugs angeschlossen ist, gemäß

$$P\left(F\right) = 1 - \prod_{i=1}^{n}(1 - P\left(L_i, d_i\right))$$

mit P (L$_i$, d$_i$) der Wahrscheinlichkeit eines Anschlusses des Elektrofahrzeugs an die jeweilige Ladestation L$_i$, welche sich in einer Entfernung d$_i$ zu dem Elektrofahrzeug befindet, berechnet wird (S3).

8. Verfahren (S1-S5) nach Anspruch 6, bei dem die Wahrscheinlichkeit P (F), dass ein bestimmtes Elektrofahrzeug an eine Ladestation L$_i$ aus einer Gruppe von Ladestation L$_i$ des ersten Energieversorgungsnetzes in der Nähe des Elektrofahrzeugs angeschlossen ist und sich zudem in der Nähe einer Gruppe von Ladestation N$_j$ eines zweiten Energieversorgungsnetzes befindet, gemäß

$$P\left(F\right) = [1 - \prod_{i=1}^{n}(1 - P\left(L_i, d_i\right))] \cdot \prod_{j=1}^{m}(1 - P\left(N_j, d_j\right))$$

mit P (L$_i$, d$_i$) der Wahrscheinlichkeit eines Anschlusses des Elektrofahrzeugs an eine jeweilige Ladestation L$_i$, welche sich in einer Entfernung d$_i$ zu dem Elektrofahrzeug befindet, und P (N$_j$, d$_j$) der Wahrscheinlichkeit eines Anschlusses des Elektrofahrzeugs an eine jeweilige Ladestation N$_j$, die sich in einer Entfernung d$_j$ zu dem Elektrofahrzeug befindet, berechnet wird (S3).

9. Ladesteuerungssystem, das dazu eingerichtet ist, das Verfahren (S1-S5) nach einem der vorhergehenden Ansprüche durchzuführen.

10. Computerprogrammprodukt, aufweisend Code, der, wenn er auf einer Datenverarbeitungseinrichtung durchgeführt wird, das Verfahren (S1-S5) nach einem der vorhergehenden Ansprüche durchführt.

**Claims**

1. Computer-implemented method (S1-S5) for adapting charging operations of electric vehicles (F1, F2), wherein a fleet operator of a fleet of electric vehicles

   - receives power request information from an operator of a first power supply network (S1);
   - assigns to electric vehicles (F1, F2) of the fleet which are currently being charged and which are located in the vicinity of the first power supply network and are not uniquely assigned to a charging station a probability (P(F1), P(F2)) that they are being charged from the first power supply network (S2, S3);
   - on the basis of these probabilities, classifies the electric vehicles (F1, F2) as being charged from the first power supply network or not being charged from the first power supply network (S4) and
   - adapts the charging operations of the electric vehicles classified as being charged from the first power supply network on the basis of the received power request information (S5).

2. Method (S1-S5) according to Claim 1, wherein an electric vehicle (F1, F2) is assigned probability values (P(F1, d), P (F2, d)) that it is connected to a specific charging station of the first power supply network (S3), these probability values (P(F1, d), P (F2, d)) being dependent at least on an ascertained distance (d) between the electric vehicle (F1, F2) and this charging station.

3. Method (S1-S5) according to Claim 2, wherein a probability value (P(F1, d), P (F2, d)) is all the greater, the smaller the distance (d) between the electric vehicle (F1, F2) and the charging station.

4. Method (S1-S5) according to any of Claims 2 to 3, wherein the probability values (P(F1, d), P (F2, d)) are dependent on a position determining device and/or locating technology used by the relevant electric vehicle (F1, F2).

5. Method (S1-S5) according to any of Claims 2 to 4, wherein the probability values (P(F1, d), P (F2, d)) are dependent on an accuracy of the knowledge of the position of the at least one charging station.

6. Method (S1-S5) according to any of Claims 2 to 5, wherein the probability that an electric vehicle (F1, F2) is connected to a charging station of the first power supply network is dependent on the number of charging stations of the first power supply network which are located in the vicinity of the electric vehicle (F1, F2).

7. Method (S1-S5) according to Claim 6, wherein the probability P (F) that an electric vehicle is connected to a charging station $L_i$ from a group of charging stations $L_i$ of the first power supply network in the vicinity of the electric vehicle is calculated in accordance with

$$P\left(F\right) = 1 - \prod_{i=1}^{n}(1 - P\left(L_i, d_i\right))$$

where P ($L_i$, $d_i$) is the probability of the electric vehicle being connected to the respective charging station $L_i$ which is located at a distance $d_i$ from the electric vehicle (S3).

8. Method (S1-S5) according to Claim 6, wherein the probability P (F) that a specific electric vehicle is connected to a charging station $L_i$ from a group of charging stations $L_i$ of the first power supply network in the vicinity of the electric vehicle and is additionally located in the vicinity of a group of charging stations $N_j$ of a second power supply network is calculated in accordance with

$$P\left(F\right) = [1 - \prod_{i=1}^{n}(1 - P\left(L_i, d_i\right))] \cdot \prod_{j=1}^{m}(1 - P\left(N_j, d_j\right))$$

where P ($L_i$, $d_i$) is the probability of the electric vehicle being connected to a respective charging station $L_i$ which is located at a distance $d_i$ from the electric vehicle, and P ($N_j$, $d_j$) is the probability of the electric vehicle being connected to a respective charging station $N_j$ which is located at a distance $d_j$ from the electric vehicle (S3).

9. Charging control system configured to carry out the method (S1-S5) according to any of the preceding claims.

10. Computer program product comprising code which, when it is executed on a data processing device, carries out the method (S1-S5) according to any of the preceding claims.

**Revendications**

1. Procédé (S1-S5) mis en œuvre par ordinateur pour adapter des opérations de charge de véhicules électriques (F1, F2), dans lequel un opérateur de flotte d'une flotte de véhicules électriques

   - reçoit (S1) une information de demande d'énergie d'un opérateur d'un premier réseau d'alimentation en énergie ;
   - associe à des véhicules électriques actuellement en charge (F1, F2) de la flotte, qui se trouvent à proximité du premier réseau d'alimentation en énergie et qui ne sont pas clairement associés à une station de charge, une probabilité (P(F1), P(F2)) qu'ils se chargent à partir du premier réseau d'alimentation en énergie (S2, S3) ;
   - sur la base de ces probabilités, classe (S4) les véhicules électriques (F1, F2) comme se chargeant à partir du premier réseau d'alimentation en énergie ou ne se chargeant pas à partir du premier réseau d'alimentation en énergie, et
   - adapte (S5) les opérations de charge des véhicules électriques classés comme se chargeant à partir du premier réseau d'alimentation en énergie, sur la base de l'information de demande d'énergie reçue.

2. Procédé (S1-S5) selon la revendication 1, dans lequel on associe (S3) à un véhicule électrique (F1, F2) des valeurs de probabilité (P(F1, d), P (F2, d)) qu'il soit raccordé à une station de charge déterminée du premier réseau d'alimentation en énergie, ces valeurs de probabilité (P(F1, d), P (F2, d)) dépendant d'au moins une distance (d) déterminée entre le véhicule électrique (F1, F2) et cette station de charge.

3. Procédé (S1-S5) selon la revendication 2, dans lequel une valeur de probabilité (P(F1, d), P(F2, d)) est d'autant plus grande que la distance (d) entre le véhicule électrique (F1, F2) et la station de charge est faible.

4. Procédé (S1-S5) selon l'une quelconque des revendications 2 à 3, dans lequel les valeurs de probabilité (P(F1, d), P(F2, d)) dépendent d'un dispositif de détermination de position et/ou d'une technologie de localisation utilisés par le véhicule électrique (F1, F2) concerné.

5. Procédé (S1-S5) selon l'une quelconque des revendications 2 à 4, dans lequel les valeurs de probabilité (P(F1, d), P(F2, d)) dépendent d'une précision de la connaissance de la position de l'au moins une station de charge.

6. Procédé (S1-S5) selon l'une quelconque des revendications 2 à 5, dans lequel la probabilité qu'un véhicule électrique (F1, F2) soit raccordé à une station de charge du premier réseau d'alimentation en énergie dépend du nombre de stations de charge du premier réseau d'alimentation en énergie se trouvant à proximité du véhicule électrique (F1, F2).

7. Procédé (S1-S5) selon la revendication 6, dans lequel la probabilité P (F) qu'un véhicule électrique soit raccordé à une station de charge $L_i$ parmi un groupe de stations de charge $L_i$ du premier réseau d'alimentation en énergie à proximité du véhicule électrique est calculée (S3) selon

$$P\left(F\right) = 1 - \prod_{i=1}^{n}(1 - P\left(L_i, d_i\right))$$

avec P ($L_i$, $d_i$) la probabilité d'un raccordement du véhicule électrique à la station de charge respective $L_i$, qui se trouve à une distance $d_i$ du véhicule électrique.

8. Procédé (S1-S5) selon la revendication 6, dans lequel la probabilité P (F) qu'un véhicule électrique donné soit raccordé à une station de charge $L_i$ d'un groupe de stations de charge $L_i$ du premier réseau d'alimentation en énergie à proximité du véhicule électrique, et se trouve également à proximité d'un groupe de stations de charge $N_j$ d'un deuxième réseau d'alimentation en énergie, est calculée (S3) selon

$$P\left(F\right) = [1 - \prod_{i=1}^{n}(1 - P\left(L_i, d_i\right))] \cdot \prod_{j=1}^{m}(1 - P\left(N_j, d_j\right))$$

avec P ($L_i$, $d_i$) la probabilité d'un raccordement du véhicule électrique à une station de charge respective $L_i$ qui se trouve à une distance $d_i$ du véhicule électrique, et P ($N_j$, $d_j$) la probabilité d'un raccordement du véhicule électrique à une station de charge respective $N_j$ qui se trouve à une distance $d_j$ du véhicule électrique.

9. Système de commande de charge adapté pour exécuter le procédé (S1-S5) selon l'une quelconque des revendications précédentes.

10. Produit de programme d'ordinateur présentant un code qui, lorsqu'il est exécuté sur un dispositif de traitement de données, exécute le procédé (S1-S5) selon l'une quelconque des revendications précédentes.

Fig.1

Fig.2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102015210726 A1
- DE 102016212245 A1
- DE 102016212244 A1
- DE 102018212283 A1
- US 2017043671 A1
- EP 2760696 B1
- US 2017036560 A1
- EP 3726455 A2